# EUROPEAN PATENT SPECIFICATION

(11) **EP 1 608 217 B1**
(45) Date of publication and mention of the grant of the patent: **19.03.2008**
(21) Application number: 04722489.4
(22) Date of filing: 22.03.2004
(51) Int. Cl.: A01J 5/08, A01J 5/04

(54) **A SET OF TEATCUPS, AND A MILKING MEMBER**
MELKBECHERSATZ UND MELKGLIED
ENSEMBLE DE GOBELETS TRAYEURS ET ELEMENT DE TRAITE

(30) Priority: 28.03.2003 SE 0300892
(43) Date of publication of application: 28.12.2005
(73) Proprietor: DeLaval Holding AB, 142 21 Tumba (SE)
(72) Inventor: KASSIBRAHIM, Jan, S-145 69 Norsborg (SE)
(74) Representative: Kossmann, Jan Henrik
(86) International application number: PCT/SE2004/000424
(87) International publication number: WO 2004/084622

(56) References cited:
- DE-B- 1 027 457
- US-A- 2 429 983
- US-A- 2 497 299
- US-A- 3 079 891
- US-A- 5 131 542
- US-A- 6 058 880

## Description

### BACKGROUND OF THE INVENTION AND PRIOR ART

The present invention refers to a set of a four of teatcup liners for a milking member including a claw and four teatcups to be attached to a respective teat of an animal to be milked, each teatcup liner having a liner portion adapted to be comprised in one of said teatcups and a conduit portion adapted to extend between the respective teatcup and the claw, wherein the conduit portion of each teatcup liner has at least one property influencing the operation of the teatcup liner during milking. The present invention also refers to a milking member including a claw, four teatcups and a set of a four of teatcup liners, each teatcup liner having a liner portion comprised in one of said teatcups and a conduit portion extending between the respective teatcup and the claw, wherein the conduit portion of each teatcup liner has at least one property influencing the operation of the teatcup liner during milking. Such a set and such a milking member is disclosed in US-A-6,058,880.

The positions of the teats of the udder of cows is in the most cases asymmetric or irregular. For instance, the distance between the two front teats is normally longer than the distance between the two rear teats. An investigation from 1983 discloses an average distance between the front teats of 150 mm, between the rear teats of 85 mm and between the rear and front teats of 100 mm. Furthermore, the front udder half is usually higher than the rear one, i.e. the two front teats are usually located at a higher position than the two rear teats. Moreover, when the udders are filled with milk the teats are relatively stiff and straggling. Therefore, the teats will be relatively immovable in relation to these positions.

This situation makes it difficult to attach teatcups configured in a conventional manner to the teats of the cow, since the teatcups do not reach the teats properly. It may therefore be difficult to attach teatcups in such a manner that they close tightly against the teat. If the teatcup liner does not close tightly against the teat, there may be a significant air inlet between the teatcup liner and the teat, which may not be controlled. This deficiency makes the milking less effective and requires a higher capacity of the vacuum pump, which in certain situations can lead to detachment of the teatcups before the milking has been terminated. There is also a restricting requirement regarding the length of the conduit portions of the teatcup liners. If the conduit portions are too long, the claw will touch the ground or the floor, at least during the end of the milking. The problems mentioned above have become worse in recent time, since the short milk conduit has become thicker and thus stiffer in order to be able to conduct an increasing milk flow. Furthermore, it has been difficult to provide a close connection between the short milk conduit and the housing of the claw due to the bending forces acting on the milk conduit. Because of this, air tends to penetrate the inner space of the housing between the short milk conduit and the inlet opening.

US-A-6,058,880 discloses a milking member including a claw, four teatcups and a set of a four of teatcup liners. Each teatcup liner has a liner portion to be comprised in one of said teatcups and a conduit portion extending between the respective teatcup and the claw. The conduit portion of each teatcup liner is substantially identical to the conduit portion of the remaining teatcup liners. This document recognises the problem caused by the irregularity of the udder. In this document it is proposed to solve this problem by providing the claw with an asymmetrical shape. The distance between the forward inlet members is longer than the distance between the rear inlet members. Moreover, the forward inlet members are provided at a higher position than the rear inlet members. Finally, this document also discloses that the forward inlet members has a larger angle of inclination to a vertical central axis than the rear inlet members.

DE-1 027 457 discloses a milking member including a claw with four inlet nipples. The two inlet nipples intended for the forward teats of the animal have a length which is shorter than the length of the inlet nipples intended for the rear teats of the animal.

US-A-631,774 discloses a milking member of a different kind. The milking member has four teatcups attached to a central member via a respective rigid milk conduit. The milk conduits extend horizontally and have a length that is adjustable by means of a telescoping mechanism.

US,A-2,497,299 discloses a milking device having a closure plate mounted to a receptacle. From the closure plate, four short milk conduits extend to a respective teatcup attached to a respective teat of an animal to be milked. Nothing is mentioned in US-A-2,497,299 about differing properties of the short milk conduits.

### SUMMARY OF THE INVENTION

The object of the present invention is to provide a solution to the problems discussed above.

This object is achieved by the set of teatcup liners initially defined, which is characterised by the characterising features of claim 1.

By means of such a configuration of the seat of teatcup liners, it may be ensured that the teatcups in a better way than previously reach their respective teats properly. The properties significally influence the operation of the milking member during the milking of the animal. The engagement or the grip between the teatcup liners and their respective teats may be improved, reducing the risk for air leakage. Furthermore, the tensions in the conduit portion may decrease and the claw will be suspended in more natural manner beneath the animal. In addition, such a configuration may also result in an equal, downwardly directed force, acting at each teat, for all four teats. Consequently, an equal and proper milk extraction of each teat may be guaranteed.

Moreover, these advantages may be achieved by the use of a conventional claw being symmetrical with regard to the position, shape an design of the milk inlet members.

According to an embodiment of the present invention, the first pair of said teatcup liners is adapted to be attached to the rear teats of the animal and the second pair of said teatcup liners is adapted to be attached to the forward teats of the animal.

According to a further embodiment or the present invention, said property includes the length of the conduit portion, wherein the length of the first pair differs from the length of the second pair by a predetermined distance. By such a design, the claw will hang down in natural way beneath the udder without sloping in any direction. Preferably, the predetermined distance corresponds to the length difference between the rear teats and the forward teats of the animal, wherein the length of the first pair may be shorter than the length of the second pair.

According to a further embodiment of the present invention said property includes the flexibility of the conduit portion, wherein the flexibility of the first pair differs from the flexibility of the second pair by a predetermined value. Such a differing flexibility is advantageous when the teats of one pair of teats are directed outwardly, since the differing flexibility permits all the teatcups to be tightly attached to the respective teat. Advantageously, the flexibility of the first pair is higher than the flexibility of the second pair.

According to a further embodiment of the present invention, said property includes the straightness of the conduit portion, wherein the straightness of the first pair differs from the straightness of the second pair by a predetermined value. By such a pre-formed modification of the straightness of the conduit portion, the attachment of the milking member to the teats may be adapted in a better way to the shape of the udder. Preferably, the straightness of the first pair is higher than the straightness of the second pair. Furthermore, each conduit portion of the first pair of teatcups liners may advantageously have a slightly S-like curvature in such a way that the distance between the conduit portions at the upper end in the proximity of the teatcup is shorter than at the lower end in the proximity of the claw.

According to a further embodiment of the present invention, each teatcup liner is one moulded piece. By moulding the teatcup liner in one single piece of material, the liner may be manufactured in an easy and convenient manner. A pre-formed straightness, e.g. a non-straight extension of the conduit portion, may easily be achieved by such a manufacturing method.

According to a further embodiment of the present invention, the set includes a member for keeping the teatcup liners together prior to the mounting of the liners in the milking member.

The object is also achieved by the milking member initially defined, which is characterised by the characterising features of claim 13. Preferred embodiments of the milking member are defined in claims 14-23.

### BRIEF DESCRIPTION OF THE DRAWINGS

The present invention will now be described more closely by means of various embodiments thereof and with reference to the drawings attached hereto.
- Fig 1: shows schematically a view of a set of teatcups liners according to a first embodiment of the present invention.
- Fig 2: shows schematically a view of a set of teatcup liners according to a second embodiment of the present invention.
- Fig 3: shows schematically a view of a milking member according to the present invention.
- Fig 4: discloses schematically a view from above of a holding member for holding the set of teatcup liners.

### DETAILED DESCRIPTION OF VARIOUS EMBODIMENTS OF THE PRESENT INVENTION

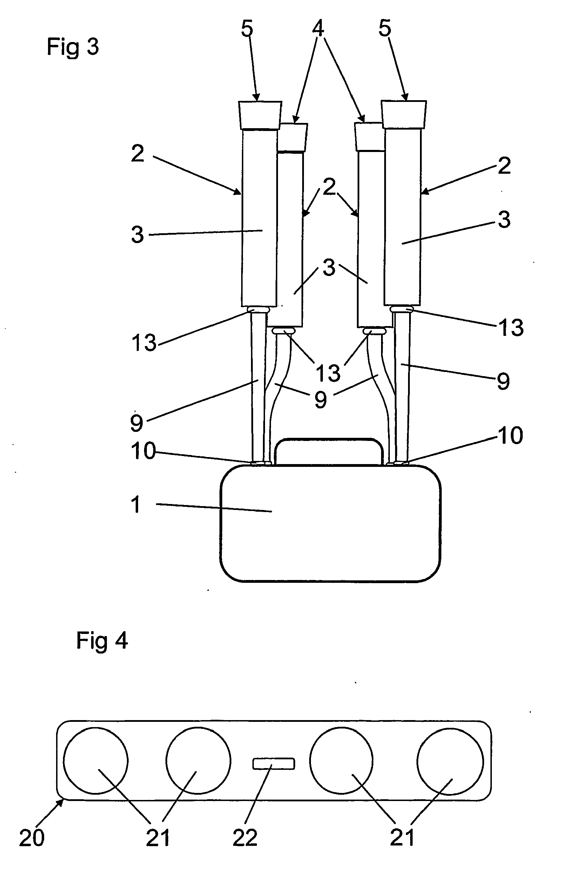

Fig 3 discloses a milking member for the milking of an animal, e.g. a cow. The milking member includes a claw 1 and four teatcups 2. Each teatcup 2 includes a teatcup shell 3 and a teatcup liner 4, 5. The claw 1 may be of any conventional type, which has a housing forming an inner space for collecting the milk from each of the teatcups 2. The teatcup liners includes two pairs of teatcup liners 4, 5, a first pair of teatcup liners 4 and a second pair of teatcup liners 5. In the embodiments disclosed, the first pair of the teatcup liners 4 is adapted to be attached to the rear teats of the animal to be milked, and the second pair of said teatcup liners 5 is adapted to be attached to the forward teats of the animal.

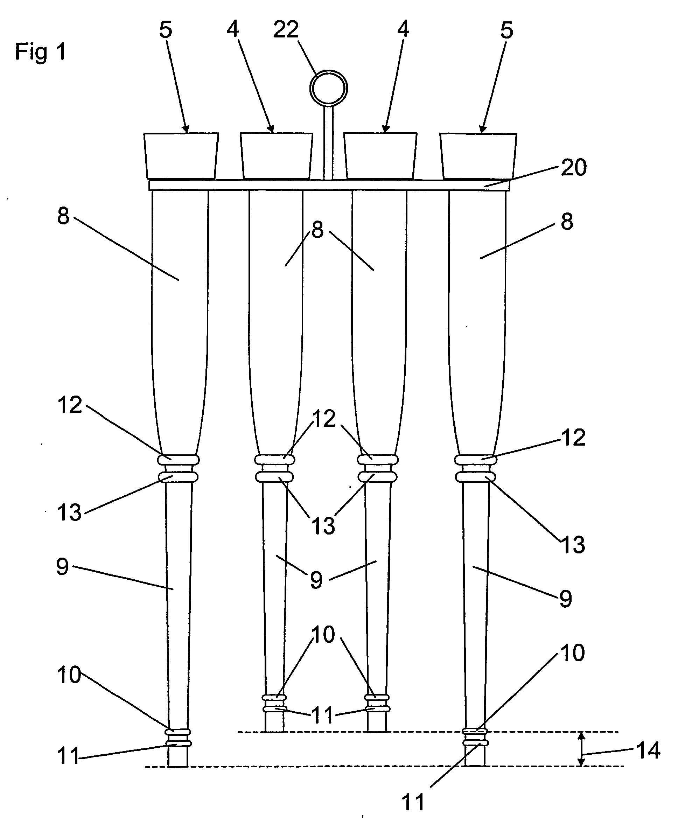

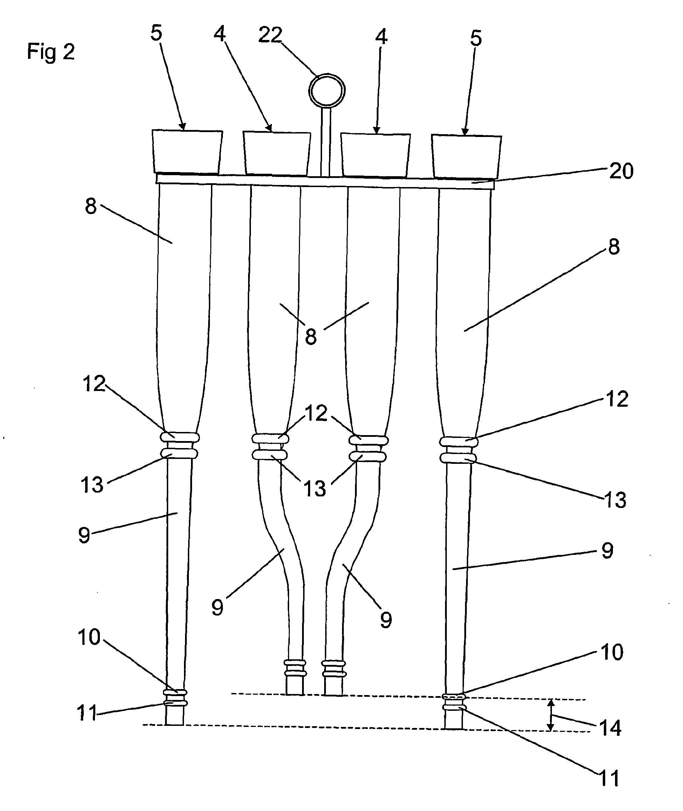

Each teatcup liner 4, 5 is moulded in one piece of a rubber material to have a pre-formed shape. Each teatcup liner 4, 5 has a liner portion 8 and a conduit portion 9, see Figs 1 and 2. The liner portion 8 is comprised in a respective one of said teatcups 2, and more precisely introduced in a respective one of the teatcup shells 3. When the teatcup 2 is attached to a teat of an animal to be milked, the teat is introduced into the interior of the liner portion 8 of the teatcup liner 4, 5. The conduit portion 9 extends between the liner portion 8 and the claw 1. The conduit portion 9 thus has an upper end in the proximity of or adjoining the liner portion 8, and a lower end. The lower end is connected to an inlet member of the claw 1.

In the embodiments disclosed, see Fig 3, the inlet member is formed by an aperture through the housing of the claw 1, wherein the lower end of the conduit portion 9 is introduced into the aperture. The lower end includes two ribs 10, 11 extending around the conduit portion 9. The ribs 10, 11 are positioned at a distance from each other. When the lower end of the conduit portion 9 is introduced in the aperture of the claw 1, one of the ribs 10 will abut the upper surface surrounding the aperture and the other rib 11 will abut the lower surface surrounding the aperture. It is to be noted that the inlet members also may be formed by tubular inlet nipples extending from the claw 1, wherein each inlet nipple is introduced into the lower end of the respective conduit portion 9.

Furthermore, each teatcup liner 4, 5 in the proximity of the upper end of the conduit portion 9 includes two ribs 12, 13 extending around the conduit portion 9. The ribs 12, 13 are positioned at a distance from each other. When the teatcup liner 4, 5 is introduced in the respective teatcup shell 3, the conduit portion 9 will extend through an opening in the lower part of the teatcup shell 3, wherein one of the ribs 12 will abut an upper surface surrounding the opening and the other rib 13 will abut the lower surface surrounding the opening.

The conduit portion 9 of each teatcup liner 4, 5 has at least one property influencing the operation of the teatcup liner 4, 5 during milking in a significant manner. More precisely, three different properties are exemplified in this application. In order to achieve an improved functioning of the milking member one, two or all of these properties are varied in a predetermined manner for the different teatcup liners 4, 5 in the set of liners to cooperate with the claw 1. In particular, said property of a first pair 8 of the four teatcup liners differs in a predetermined manner from said property of a second pair of the four teatcup liners 4, 5.

According to a first embodiment, disclosed in Fig 1, said property refers to the length of the conduit portion 9, i.e. the length of one of said pairs differs from the length of the other of said pair by a predetermined distance 14. In particular, the length of the first pair of teatcup liners 4 to be attached to the rear teats is shorter than the length of the second pair of teatcup liners 5 to be attached to the forward teats. Since the rear teats normally are lower than the forward teats, this embodiment permits the claw 1 to hang down properly, i.e. without sloping in any direction. Preferably, the predetermined distance 14 corresponds to an average length difference between the rear teats and the forward teats of an animal, for instance a cow. For instance, the distance 14 may be at least 10 mm, at least 20 mm, at least 30 mm or at least 40 mm.

According to a second embodiment, said property refers to the flexibility of the conduit portion 9, wherein the flexibility of the first pair of teatcup liners 4 differs from the flexibility of the second pair of teatcup liners 5 by a predetermined value. In particular, the flexibility of the first pair of teatcup liners 4 to be attached to the rear teats of the animal is higher than the flexibility of the second pair of teatcup liners 5 to be attached to the forward teats of the animal.

According to a third embodiment, disclosed in Fig 2, said property refers to the straightness of the conduit portion 9, wherein the straightness of the first pair of teatcup liners 4 differs from the straightness of the second pair of teatcup liners 5 by a predetermined value. In particular, the straightness of the second pair of teatcup liners 5 to be attached to the forward teats of the animal is higher than the straightness of the first pair of teatcup liners 4 to be attached to the rear teats of the animal. As disclosed in Figs 2 and 3, each conduit portion 9 of the first pair of teatcups liners 4 has a slightly S-like curvature in such a way that the distance between the conduit portions 9 of the first pair of teatcup liners 4 at the upper end adjoining the liner portion 8 in the proximity of the teatcup shell 3 is shorter than at the lower end to be connected to the claw 1. By such a non-straight extension it is possible to compensate for the shorter mutual distance between the rear teats than between the forward teats. Moreover, by such a non-straight extension it is also possible to compensate for the shorter distance between the pair of rear teats and the pair of forward teats than mutual distance between the two forward teats.

It is to be noted that the three property differences between the first pair of teatcup liners 4 and second pair of teatcup liners 5, which have been described above, may be combined with each other in all possible combinations. Thus the first pair may be shorter and more flexible than the second pair, shorter and less straight than the second pair, more flexible and less straight than the second pair, and/or shorter, more flexible and less straight than the second pair.

The four teatcup liners 4, 5 form a set of teatcup liners to be mounted in a respective teatcup shell 3 and attached to a claw 2 of a milking member. The set of teatcup liners 4, 5 may be sold and distributed to a milk farmer as one unit. In order to facilitate the distribution and the handling on the milk farm, the teatcup liners 4, 5 of the set may be kept together in a package by a member, e.g. a holding member 20. The holding member 20 disclosed has four engagement portions 21 or openings for engaging a respective one of the teatcup liners 4, 5, see also Fig 4, and a grip portion 22.

The present invention is not limited to the embodiments disclosed and described herein, but may be varied and modified within the scope of the following claims.

## Claims

1. A set of a four of teatcup liners (4, 5) for a milking member including a claw (1) and four teatcups (2) to be attached to a respective teat of an animal to be milked, each teatcup liner (4, 5) having a liner portion (8) adapted to be comprised in one of said teatcups (2) and a conduit portion (5) adapted to extend between the respective teatcup and the claw, wherein the conduit portion (9) of each teatcup liner has at least one property influencing the operation of the teatcup liner during milking, **characterised in that** said property of the conduit portion (9) of a first pair of the four teatcup liners (4) differs in a predetermined manner from said property of a second pair of the four teatcup liners (5), and that said property includes at least one of the length of the conduit portion (9), the flexibility of the conduit portion (9) and the straightness of the conduit portion (9).

2. The set according to claim 1, **characterised in that** the first pair of said teatcup liners (4) is adapted to be attached to the rear teats of the animal and the second pair of said teatcup liners (5) is adapted to be attached to the forward teats of the animal.

3. The set according to any one of the preceding claims, **characterised in that** said property includes the length of the conduit portion (9), wherein the length of the first pair differs from the length of the second pair by a predetermined distance (14).

4. The set according to claim 3, **characterised in that** the predetermined distance (14) corresponds to the length difference between the rear teats and the forward teats of the animal.

5. The set according to claim 4, **characterised in** the length of the first pair is shorter than the length of the second pair.

6. The set according to any one of the preceding claims, **characterised in that** said property includes the flexibility of the conduit portion (9), wherein the flexibility of the first pair differs from the flexibility of the second pair by a predetermined value.

7. The set according to claim 6, **characterised in that** the flexibility of the first pair is higher than the flexibility of the second pair.

8. The set according to any one of the preceding claims, **characterised in that** said property includes the straightness of the conduit portion (9), wherein the straightness of the first pair differs from the straightness of the second pair by a predetermined value.

9. The set according to claim 8, **characterised in that** the straightness of the second pair is higher than the straightness of the first pair.

10. The set according to claim 9, **characterised in that** each conduit portion (9) of the first pair of teatcups liners (4) has a slightly S-like curvature in such a way that the distance between the conduit portions (9) at the upper end in the proximity of the teatcup (2) is shorter than at the lower end in the proximity of the claw (1).

11. The set according to any one of the preceding claims, **characterised in that** each teatcup liner (4, 5) is one moulded piece.

12. The set according to any one of the preceding claims, **characterised in that** the set includes a member (20) for keeping the teatcup liners (4, 5) together prior to the mounting of the liners in the milking member.

13. A milking member including a claw (1), four teatcups (2) and a set of a four of teatcup liners (4, 5) each teatcup liner (4, 5) having a liner portion (8) comprised in one of said teatcups (2) and a conduit portion (9) extending between the respective teatcup (2) and the claw (1), wherein the conduit portion (9) of each teatcup (4, 5) has at least one property influencing the operation of the teatcup liner during milking, **characterised in that** said property of a first pair of the four teatcup liners (4) differs in a predetermined manner from said property of a second pair of the four teatcup liners (5), and that said property includes at least one of the length of the conduit portion (9), the flexibility of the conduit portion (9) and the straightness of the conduit portion (9).

14. The milking member according to claim 13, **characterised in that** the first pair of said teatcup liners (4) is adapted to be attached to the rear teats of the animal and the second pair of said teatcup liners (5) is adapted to be attached to the forward teats of the animal.

15. The milking member according to any one of claims 13 and 14, **characterised in that** said property includes the length of the conduit portion (9), wherein the length of the first pair differs from the length of the second pair by a predetermined distance (14).

16. The milking member according to claim 15, **characterised in that** the predetermined distance (14) corresponds to the length difference between the rear teats and the forward teats of the animal.

17. The milking member according to claim 16, **characterised in** the length of the first pair is shorter than the length of the second pair.

18. The milking member according to any one of claims 13 to 17, **characterised in that** said property includes the flexibility of the conduit portion (9), wherein the flexibility of the first pair differs from the flexibility of the second pair by a predetermined value.

19. The milking member according to claim 18, **characterised in that** the flexibility of the first pair is higher than the flexibility of the second pair.

20. The milking member according to any one of claims 13 to 19, **characterised in that** said property includes the straightness of the conduit portion (9), wherein the straightness of the first pair differs from the straightness of the second pair by a predetermined value.

21. The milking member according to claim 20, **characterised in that** the straightness of the second pair is higher than the straightness of the first pair.

22. The milking member according to claim 21, **characterised in that** each conduit portion of the first pair of teatcups liners (4) has a slightly S-like curvature in such a way that the distance between the conduit portions (9) at the upper end in the proximity of the teatcup (2) is shorter than at the lower end in the proximity of the claw (1).

23. The milking member according to any one of claims 13 to 22, **characterised in that** each teatcup liner (4, 5) is one moulded piece.

## Patentansprüche

1. Satz von vier Zitzengummis (4, 5) für ein Melkelement, umfassend ein Sammelstück (1) und vier Zitzenbecher (2), die an eine jeweilige Zitze eines zu melkenden Tieres angesetzt werden, wobei jeder Zitzengummi (4, 5) einen Gummiabschnitt (8) umfasst, der in einem der Zitzenbecher (2) enthalten ist, und einen Leitungsabschnitt (5), der sich zwischen dem jeweiligen Zitzenbecher und dem Sammelstück erstreckt, wobei der Leitungsabschnitt (9) jedes Zitzengummis mindestens eine Eigenschaft hat, die den Betrieb des Zitzengummis während des Melkens beeinflusst, **dadurch gekennzeichnet, dass** die Eigenschaft des Leitungsabschnittes (9) eines ersten Paares der vier Zitzengummis (2) in vorbestimmter Weise von dieser Eigenschaft eines zweiten Paares der vier Zitzengummis (5) abweicht und dass die Eigenschaft mindestens die Länge des Leitungsabschnittes (9), die Flexibilität des Leitungsabschnittes (9) oder die Geradheit des Leitungsabschnittes (9) umfasst.

2. Satz nach Anspruch 1, **dadurch gekennzeichnet, dass** das erste Paar von Zitzengummis (4) an die hinteren Zitzen des Tieres angesetzt wird und das zweite Paar von Zitzengummis (5) an die vorderen Zitzen des Tieres angesetzt wird.

3. Satz nach einem der vorangegangenen Ansprüche, **dadurch gekennzeichnet, dass** die Eigenschaft die Länge des Leitungsabschnittes (9) umfasst, wobei die Länge des ersten Paares von der Länge des zweiten Paares um eine vorbestimmte Länge (14) abweicht.

4. Satz nach Anspruch 3, **dadurch gekennzeichnet, dass** die vorbestimmte Länge (14) dem Längenunterschied zwischen den hinteren Zitzen und den vorderen Zitzen des Tieres entspricht.

5. Satz nach Anspruch 4, **dadurch gekennzeichnet, dass** die Länge des ersten Paares kürzer ist als die Länge des zweiten Paares.

6. Satz nach einem der vorangegangenen Ansprüche, **dadurch gekennzeichnet, dass** die Eigenschaft die Flexibilität des Leitungsabschnittes (9) umfasst, wobei die Flexibilität des ersten Paares von der Flexibilität des zweiten Paares um einen vorbestimmten Wert abweicht.

7. Satz nach Anspruch 6, **dadurch gekennzeichnet, dass** die Flexibilität des ersten Paares höher ist als die Flexibilität des zweiten Paares.

8. Satz nach einem der vorangegangenen Ansprüche, **dadurch gekennzeichnet, dass** die Eigenschaft die Geradheit des Leitungsabschnittes (9) umfasst, wobei die Geradheit des ersten Paares von der Geradheit des zweiten Paares um einen vorbestimmten Wert abweicht.

9. Satz nach Anspruch 8, **dadurch gekennzeichnet, dass** die Geradheit des zweiten Paares höher ist als die Geradheit des ersten Paares.

10. Satz nach Anspruch 9, **dadurch gekennzeichnet, dass** jeder Leitungsabschnitt (9) des ersten Paares von Zitzengummis (4) eine leichte S-artige Krümmung dergestalt hat, dass der Abstand zwischen den Leitungsabschnitten (9) am oberen Ende in der Nähe des Zitzenbechers (2) kürzer ist als am unteren Ende in der Nähe des Sammelstücks (1).

11. Satz nach einem der vorangegangenen Ansprüche, **dadurch gekennzeichnet, dass** jeder Zitzengummi (4, 5) ein Formstück ist.

12. Satz nach einem der vorangegangenen Ansprüche, **dadurch gekennzeichnet, dass** der Satz ein Element (20) zum Zusammenhalten der Zitzengummis (4, 5) vor der Befestigung der Gummis im Melkelement umfasst.

13. Melkelement, umfassend ein Sammelstück (1), vier Zitzenbecher (2) und einen Satz von vier Zitzengummis (4, 5), wobei jeder Zitzengummi (4, 5) einen Gummiabschnitt (8) umfasst, der in einem der Zitzenbecher (2) enthalten ist, und einen Leitungsabschnitt (9), der sich zwischen dem jeweiligen Zitzenbecher (2) und dem Sammelstück (1) erstreckt, wobei der Leitungsabschnitt (9) jedes Zitzengummis (4,5) mindestens eine Eigenschaft hat, die den Betrieb des Zitzengummis während des Melkens beeinflusst, **dadurch gekennzeichnet, dass** die Eigenschaft eines ersten Paares der vier Zitzengummis (4) in einer vorbestimmten Weise von dieser Eigenschaft eines zweiten Paares von den vier Zitzengummis (5) abweicht und dass die Eigenschaft mindestens die Länge des Leitungsabschnittes (9), die Flexibilität des Leitungsabschnittes (9) oder die Geradheit des Leitungsabschnittes (9) umfasst.

14. Melkelement nach Anspruch 13, **dadurch gekennzeichnet, dass** das erste Paar von Zitzengummis (4) an die hinteren Zitzen des Tieres angesetzt wird und das zweite Paar von Zitzengummis (5) an die vorderen Zitzen des Tieres angesetzt wird.

15. Melkelement nach einem der Ansprüche 13 und 14, **dadurch gekennzeichnet, dass** die Eigenschaft die Länge des Leitungsabschnittes (9) umfasst, wobei die Länge des ersten Paares von der Länge des zweiten Paares um eine vorbestimmte Länge (14) abweicht.

16. Melkelement nach Anspruch 15, **dadurch gekennzeichnet, dass** die vorbestimmte Länge (14) dem Längenunterschied zwischen den hinteren Zitzen und den vorderen Zitzen des Tieres entspricht.

17. Melkelement nach Anspruch 16, **dadurch gekennzeichnet, dass** die Länge des ersten Paares kürzer ist als die Länge des zweiten Paares.

18. Melkelement nach einem der Ansprüche 13 bis 17, **dadurch gekennzeichnet, dass** die Eigenschaft die Flexibilität des Leitungsabschnittes (9) umfasst, wobei die Flexibilität des ersten Paares von der Flexibilität des zweiten Paares um einen vorbestimmten Wert abweicht.

19. Melkelement nach Anspruch 18, **dadurch gekennzeichnet, dass** die Flexibilität des ersten Paares höher ist als die Flexibilität des zweiten Paares.

20. Melkelement nach einem der Ansprüche 13 bis 19, **dadurch gekennzeichnet, dass** die Eigenschaft die Geradheit des Leitungsabschnittes (9) umfasst, wobei die Geradheit des ersten Paares von der Geradheit des zweiten Paares um einen vorbestimmten Wert abweicht.

21. Melkelement nach Anspruch 20, **dadurch gekennzeichnet, dass** die Geradheit des zweiten Paares höher ist als die Geradheit des ersten Paares.

22. Melkelement nach Anspruch 21, **dadurch gekennzeichnet, dass** jeder Leitungsabschnitt (9) des ersten Paares von Zitzengummis (4) eine leichte S-artige Krümmung dergestalt hat, dass der Abstand zwischen den Leitungsabschnitten (9) am oberen Ende in der Nähe des Zitzenbechers (2) kürzer ist als am unteren Ende in der Nähe des Sammelstücks (1).

23. Melkelement nach einem der Ansprüche 13 bis 22, **dadurch gekennzeichnet, dass** jeder Zitzengummi (4, 5) ein Formstück ist.

## Revendications

1. Ensemble de quatre manchons-trayeurs (4, 5) pour élément de traite comprenant une griffe (1) et quatre gobelets-trayeurs (2) destinés à être fixés à un trayon respectif d'un animal à traire, chaque manchon-trayeur (4, 5) ayant une partie manchon (8) adaptée pour être comprise dans l'un desdits gobelets-trayeurs (2) et une partie tuyau (5) adaptée pour s'étendre entre le gobelet-trayeur respectif et la griffe, la partie tuyau (9) de chaque manchon-trayeur ayant au moins une propriété influençant le fonctionnement du manchon-trayeur pendant la traite, **caractérisé en ce que** ladite propriété de la partie tuyau (9) d'une première paire des quatre manchons-trayeurs (4) diffère d'une manière prédéterminée de ladite propriété d'une deuxième paire des quatre manchons-trayeurs (5), et **en ce que** ladite propriété comprend au moins une propriété parmi la longueur de la partie tuyau (9), la souplesse de la partie tuyau (9) et la rectitude de la partie tuyau (9).

2. Ensemble selon la revendication 1, **caractérisé en ce que** la première paire desdits manchons-trayeurs (4) est adaptée pour être fixée aux trayons arrière de l'animal et la deuxième paire desdits manchons-trayeurs (5) est adaptée pour être fixée aux trayons avant de l'animal.

3. Ensemble selon l'une quelconque des revendications précédentes, **caractérisé en ce que** ladite propriété comprend la longueur de la partie tuyau (9), la longueur de la première paire différant de la longueur de la deuxième paire d'une distance prédéterminée (14).

4. Ensemble selon la revendication 3, **caractérisé en ce que** la distance prédéterminée (14) correspond à la différence de longueur entre les trayons arrière et les trayons avant de l'animal.

5. Ensemble selon la revendication 4, **caractérisé en ce que** la longueur de la première paire est inférieure à la longueur de la deuxième paire.

6. Ensemble selon l'une quelconque des revendications précédentes, **caractérisé en ce que** ladite propriété comprend la souplesse de la partie tuyau (9), la souplesse de la première paire différant de la souplesse de la deuxième paire d'une valeur prédéterminée.

7. Ensemble selon la revendication 6, **caractérisé en ce que** la souplesse de la première paire est supérieure à la souplesse de la deuxième paire.

8. Ensemble selon l'une quelconque des revendications précédentes, **caractérisé en ce que** ladite propriété comprend la rectitude de la partie tuyau (9), la rectitude de la première paire différant de la rectitude de la deuxième paire d'une valeur prédéterminée.

9. Ensemble selon la revendication 8, **caractérisé en ce que** la rectitude de la deuxième paire est supérieure à la rectitude de la première paire.

10. Ensemble selon la revendication 9, **caractérisé en ce que** chaque partie tuyau (9) de la première paire de manchons-trayeurs (4) a une légère courbure en S, de telle manière que la distance qui sépare les parties tuyau (9) à l'extrémité supérieure au voisinage du gobelet-trayeur (2) est plus petite qu'à l'extrémité inférieure au voisinage de la griffe (1).

11. Ensemble selon l'une quelconque des revendications précédentes, **caractérisé en ce que** chaque manchon-trayeur (4, 5) est formé d'une pièce moulée.

12. Ensemble selon l'une quelconque des revendications précédentes, **caractérisé en ce que** l'ensemble comprend un élément (20) pour maintenir les manchons-trayeurs (4, 5) groupés avant le montage des manchons dans l'élément de traite.

13. Elément de traite comprenant une griffe (1), quatre gobelets-trayeurs (2) et un ensemble de quatre manchons-trayeurs (4, 5), chaque manchon-trayeur (4, 5) ayant une partie manchon (8) comprise dans l'un desdits gobelets-trayeurs (2) et une partie tuyau (9) s'étendant entre le gobelet-trayeur (2) respectif et la griffe (1), la partie tuyau (9) de chaque manchon-trayeur (4, 5) ayant au moins une propriété influençant le fonctionnement du manchon-trayeur pendant la traite, **caractérisé en ce que** ladite propriété d'une première paire des quatre manchons-trayeurs (4) diffère d'une manière prédéterminée de ladite propriété d'une deuxième paire des quatre manchons-trayeurs (5), et **en ce que** ladite propriété comprend au moins une propriété parmi la longueur de la partie tuyau (9), la souplesse de la partie tuyau (9) et la rectitude de la partie tuyau (9).

14. Elément de traite selon la revendication 13, **caractérisé en ce que** la première paire desdits manchons-trayeurs (4) est adaptée pour être fixée aux trayons arrière de l'animal et la deuxième paire desdits manchons-trayeurs (5) est adaptée pour être fixée aux trayons avant de l'animal.

15. Elément de traite selon la revendication 13 ou 14, **caractérisé en ce que** ladite propriété comprend la longueur de la partie tuyau (9), la longueur de la première paire différant de la longueur de la deuxième paire d'une distance prédéterminée (14).

16. Elément de traite selon la revendication 15, **caractérisé en ce que** la distance prédéterminée (14) correspond à la différence de longueur entre les trayons arrière et les trayons avant de l'animal.

17. Elément de traite selon la revendication 16, **caractérisé en ce que** la longueur de la première paire est inférieure à la longueur de la deuxième paire.

18. Elément de traite selon l'une quelconque des revendications 13 à 17, **caractérisé en ce que** ladite propriété comprend la souplesse de la partie tuyau (9), la souplesse de la première paire différant de la souplesse de la deuxième paire d'une valeur prédéterminée.

19. Elément de traite selon la revendication 18, **caractérisé en ce que** la souplesse de la première paire est supérieure à la souplesse de la deuxième paire.

20. Elément de traite selon l'une quelconque des revendications 13 à 19, **caractérisé en ce que** ladite propriété comprend la rectitude de la partie tuyau (9), la rectitude de la première paire différant de la rectitude de la deuxième paire d'une valeur prédéterminée.

21. Elément de traite selon la revendication 20, **caractérisé en ce que** la rectitude de la deuxième paire est supérieure à la rectitude de la première paire.

22. Elément de traite selon la revendication 21, **caractérisé en ce que** chaque partie tuyau de la première paire de manchons-trayeurs (4) a une légère courbure en S, de telle manière que la distance qui sépare les parties tuyau (9) à l'extrémité supérieure au voisinage du gobelet-trayeur (2) est plus petite qu'à l'extrémité inférieure au voisinage de la griffe (1).

23. Elément de traite selon l'une quelconque des revendications 13 à 22, **caractérisé en ce que** chaque manchon-trayeur (4, 5) est formé d'une pièce moulée.
